(19) Europäisches Patentamt European Patent Office Office européen des brevets

(11) **EP 2 524 509 B1**

(12) **EUROPEAN PATENT SPECIFICATION**

(45) Date of publication and mention
of the grant of the patent:
**28.02.2018 Bulletin 2018/09**

(21) Application number: **10842941.6**

(22) Date of filing: **12.01.2010**

(51) Int Cl.:
***H04N 9/73*** *(2006.01)*     *H04N 5/235* *(2006.01)*

(86) International application number:
**PCT/IB2010/050104**

(87) International publication number:
**WO 2011/086420 (21.07.2011 Gazette 2011/29)**

(54) **REDUCTION OF NOISE BY CAPTURING IMAGES WITH DIFFERENT EXPOSURE TIMES**

RAUSCHUNTERDRÜCKUNG DURCH ERFASSUNG VON BILDERN MIT VERSCHIEDENEN
BELICHTUNGSZEITEN

RÉDUCTION DE BRUIT PAR CAPTURE D'IMAGES AYANT DES TEMPS D'EXPOSITION
DIFFÉRENTS

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**21.11.2012 Bulletin 2012/47**

(73) Proprietor: **Nokia Technologies Oy
02610 Espoo (FI)**

(72) Inventor: **CIPRIAN, Bilcu Radu
33710 Tampere (FI)**

(74) Representative: **Nokia EPO representatives
Nokia Technologies Oy
Karaportti 3
02610 Espoo (FI)**

(56) References cited:
**GB-A- 2 226 926        US-A- 5 202 767
US-A- 6 091 848        US-A1- 2004 141 074
US-A1- 2005 285 971     US-A1- 2005 285 971
US-A1- 2006 152 598     US-B1- 6 665 007**

## Description

The present invention relates to an apparatus for processing colour balance in an image, and specifically but not only for processing colour balance in an image in a mobile apparatus.

The process of colour balancing in a digital image typically involves the adjustment of the relative intensities of the colours present in the image so to change the overall mixture of colours in the image, which in turn may result in an alteration to the overall perceived colour of the image.

In particular, colour balancing may be used to compensate for the effect of ambient illumination conditions on the image such as the influence of illumination conditions within an image of neutral colours such as whites and greys. In such instances the neutral colours may appear a different shade in the image to that which occurs in reality.

Colour balancing may be used to redress this effect by balancing (or correcting) the neutral colours in the image such that they appear neutral as in the appearance of the original subject rather than taking on a different shade of colour.

Colour balancing systems may express illumination conditions and their effect on neutral colours by determining the colour of the light in terms of a quantifiable scale known as the colour temperature scale.

The Colour temperature of light may be viewed as the temperature at which a heated black body radiator matches the colour of the light source.

Measurement of the colour temperature may be used by digital cameras to automatically correct for the colouration of the neutral colours in an image caused by the light. Typically this correction may be performed in the digital camera by an auto white balancing (AWB) algorithm, whereby the components of the image are automatically subjected to correction factors in accordance with the colour of the light measured against the colour temperature scale. This enables the digital camera to adjust the overall mixture of colours in the processed image thereby compensating for the colouration of the neutral colours.

Auto white balancing techniques are mainly based on processing the statistics of a single input image in order to determine the colour correction factor associated with each image colour component. Colour correction may then be applied by multiplying each colour component by its corresponding colour correction factor.

These types of auto white balancing algorithms are inherently simple and enjoy good colour rendition.

However, such auto white balancing algorithms may incur the disadvantage of increased noise in the processed image as a consequence of applying the correction factors. The increased noise may be attributed to the fact that the process of digital image capture may introduce a noise floor into each colour component as part of the capture process, and in some instances the magnitude of the colour correction factors may be sufficiently high enough such that their multiplication with their corresponding colour component results in an amplification of the noise floor.

US patent application 2005/0285971 discloses a digital imaging device which provides for different exposure times for each of a set of colour components, the exposure time of each colour component being inversely related to its strength relative to the other colour components in a pre-exposure frame.

US patent 6091848 discloses a colour balance device in which the gains of the green component signal and blue component signal are changed in accordance with the displacement of a button on the surface of the device.

This application proceeds from the consideration that whilst single frame AWB techniques have the advantage of being simple and enjoying good colour rendition, they have the disadvantage of potentially introducing excess noise into the colour components of the image.

Embodiments of the present invention aim to address the above problem.
The invention is defined by the independent claims. The dependent claims define advantageous embodiments.

Brief Description of Drawings

For better understanding of the present invention, reference will now be made by way of example to the accompanying drawings in which:

Figure 1 shows schematically an electronic device employing embodiments of the invention;
Figure 2 shows schematically an user equipment suitable for employing embodiments of the invention;
Figure 3 shows schematically an image processing system deploying an embodiment of the invention;
Figure 4 shows schematically a digital image processor deploying an embodiment of the invention; and
Figure 5 shows a flow diagram illustrating in further detail a part of the operation of an embodiment of the digital image processor as shown in Figure 4;

Description of some embodiments

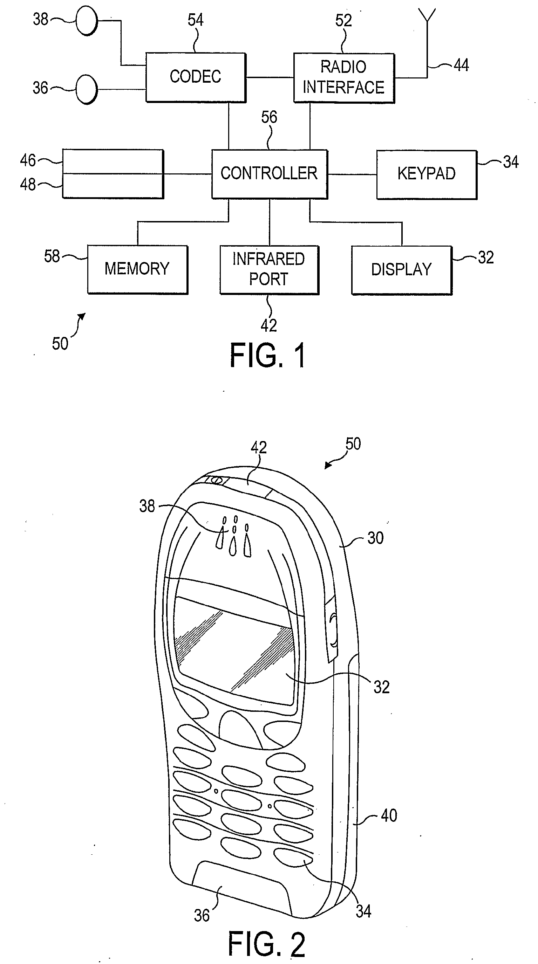

The following describes in further detail suitable apparatus and possible mechanisms for the provision of colour correction or auto white balancing in imaging devices. In this regard reference is first made to Figures 1 and 2 which show a schematic block diagram of an exemplary apparatus or electronic device 50, which may incorporate an image processing system according to some embodiments of the invention and a possible physical representation of the same apparatus. The following examples describe specifically an auto white balancing operation and thus features an auto white balance processor, however it would be appreciated that any suitable colour or tint may be output by a combination of the images similar to those described hereafter using a 'colour balance' processor to produce any required colour balancing.

The electronic device or apparatus 50 may for example be a mobile terminal or user equipment of a wireless communication system. However, it would be appreciated that embodiments of the invention may be implemented within any electronic device or apparatus which may require encoding and decoding or encoding or decoding video images.

The apparatus 50 may comprise a housing 30 for incorporating and protecting the components of the apparatus. The apparatus 50 further may comprise a display 32 in the form of a liquid crystal display. In other examples the display may be any suitable display technology suitable to display an image or video. The apparatus 50 may further comprise a keypad 34. In other examples any suitable data or user interface mechanism may be employed. For example the user interface may be implemented as a virtual keyboard or data entry system as part of a touch-sensitive display. The apparatus may comprise a microphone 36 or any suitable audio input which may be a digital or analogue signal input. The apparatus 50 may further comprise an audio output device which in examples of the invention may be any one of: an earpiece 38, speaker, or an analogue audio or digital audio output connection. The apparatus 50 may also comprise a battery 40 (or in other examples the device may be powered by any suitable mobile energy device such as solar cell, fuel cell or clockwork generator). The apparatus may further comprise an infrared port 42 for short range line of sight communication to other devices. In other examples the apparatus 50 may further comprise any suitable short range communication solution such as for example a Bluetooth wireless connection or a USB/firewire wired connection.

The apparatus 50 may comprise a controller 56 or processor for controlling the apparatus 50. The controller 56 may be connected to memory 58 which in examples of the invention may store both data in the form of image and audio data and/or may also store instructions for implementation on the controller 56. The controller 56 may further be connected to codec circuitry 54 suitable for carrying out coding and decoding of audio and/or image data or assisting in coding and decoding carried out by the controller 56.

The apparatus 50 may further comprise a card reader 48 and a smart card 46, for example a UICC and UICC reader for providing user information and being suitable for providing authentication information for authentication and authorization of the user at a network.

The apparatus 50 may comprise radio interface circuitry 52 connected to the controller and suitable for generating wireless communication signals for example for communication with a cellular communications network, a wireless communications system or a wireless local area network. The apparatus 50 further may comprise an antenna 44 connected to the radio interface circuitry 52 for transmitting and receiving radio frequency signals generated at the radio interface circuitry 52.

In some examples, the apparatus 50 comprises a camera capable of recording or detecting individual frames which are then passed to the codec 54 or controller for processing. In other examples, the apparatus may receive the video image data for processing from an adjacent device prior to transmission and/or storage. In other examples, the apparatus 50 may receive either wirelessly or by a wired connection the image for coding/decoding.

In some other examples the apparatus 50 may be one of the following; a personal digital assistant (PDA), an integrated messaging device (IMD), a desktop computer or notebook computer. The apparatus 50 may be stationary or mobile when carried by an individual who is moving. The apparatus 50 may also be located in a mode of transport including, but not limited to, a car, a truck, a taxi, a bus, a train, a boat, an aeroplane, a bicycle, a motorcycle or any similar suitable mode of transport.

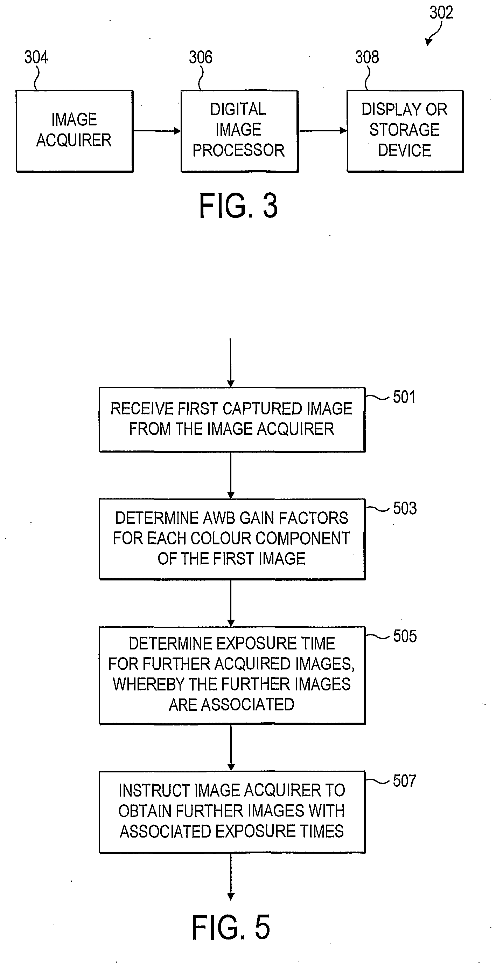

Embodiments of the invention are now described in more detail with respect to Figures 3 to 5.

The general operation of digital image processors as employed by embodiments of the invention is shown in Figure 3. A general image processing system 302 is illustrated schematically in Figure 3. The system 302 may comprise an image acquirer 304, a digital image processor 306, and a display or storage device 308.

The image acquirer 304 may comprise an image sensor to capture the light reflected from a subject and then an analogue to digital converter (ADC) in order to digitize the signal produced by the image sensor. The digitized image signal 312 may then be processed by the digital image processor 306 and then either displayed or stored on the display or storage device 308.

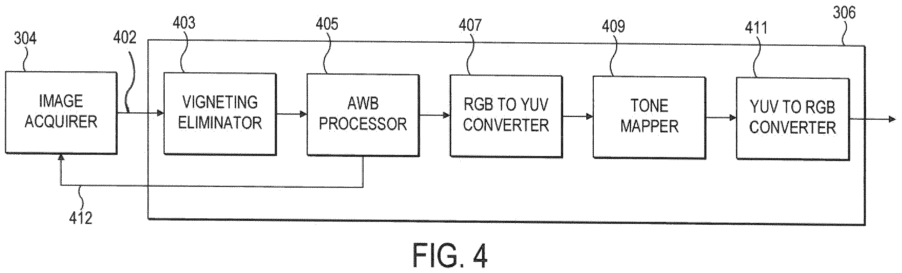

Figure 4 shows schematically a digital image processor 306 suitable for carrying out embodiments of the invention. Also depicted in Figure 4 is the connection of the digital image processor 306 to the image acquirer 304. Furthermore, with respect to Figure 5, the operation of the digital image processor 306 exemplifying embodiments of the invention is shown in detail.

The digital image processor 306 comprises an input 402 by which the digitized signal may be received from the image acquirer 304. The input signal to the digital image processor 306 may comprise a plurality of component signals whereby each signal may convey a particular colour component of the colour space representing digitized image.

It is to be understood that the component colour signal may be determined by the type of colour filter array (CFA) deployed in the invention.

In some embodiments the colour filter array may of a Bayer filter type in which the signal connection 402 may be used to convey the colour component signal of the colour filter array output. In these embodiments the Bayer filter array may be considered as an array grid pattern comprising alternatively disposed horizontal lines of either Red, Green, Red, Green pixels, or Green, Blue, Green, Blue pixels. Consequently the CFA output signals from a Bayer filter array may comprise the signals $G_r$, $G_b$, R and B, where $G_r$ and R denotes green and red pixels respectively from the R, G, R, G horizontal array line, and $G_b$ and B denotes a green and blue pixels respectively from the R, B, R, B horizontal array line. The number of image colour component signals conveyed by the connection 402 in Figure 4 may be determined by the number of output colour filter array image signals from the Bayer filter.

It is to be understood that the CFA output signal 402 from the image acquirer 304 in Figure 4 may be determined by the type of image sensor and the particular type of colour filter array deployed within the image acquirer 304.

In other examples, the output signal 402 may convey a different set of CFA signals. For example, in embodiments deploying a CYYM (Cyan-Yellow-Yellow-Magenta) colour array filter then the components of the signal 402 may comprise a cyan, two yellow and a magenta image signals.

Further, it is to be understood that in general the number and type of image colour component signal may be determined by the type of CFA adopted.

Therefore the number of image colour components may be a number other than four. For example, an embodiment may deploy an image acquisition system which may output three image colour component signals comprising the colours Red (R), Green (G) and Blue (B).

The output signal 402 from the image acquirer 304 may be received within the digital image processor 306 by the vignetting eliminator 403. The signal 402 which conveys the image colour components may then be corrected for brightness elimination around the periphery edge of the image by the vignetting eliminator 403.

In some examples, the process of vignetting correction may take the form of deploying a parametric vignetting model. In these examples, the algorithm used may model the intensity variations in a scene which are caused by the difference in distances from the camera. In other words these algorithms may compensate for the fact that closer points appear brighter due to the inverse square law of illumination.

The auto white balance (AWB) processor 405 may then be arranged to receive the corrected CFA image signal from the output of the vignetting eliminator 403.

In some embodiments the AWB processor 405 may be configured to correct for the colouration of neutral colours in an image by controlling the exposure time of the image acquirer 304 whilst obtaining the image.

The AWB processor 405 and image acquirer 304 may be arranged such that the image acquirer may be instructed by the AWB processor 405 to obtain a set of individual images of varying exposure times. In other words an image captured by the image acquirer 304 may in fact comprise a set of individual images whereby each one of the individual images has a different exposure time.

The number of individual images captured by the image acquirer 304 may be determined by the number of colour components which constitute the output of the CFA, in other words the number of image colour components. For example, in embodiments which deploy a CFA of the Bayer type the set of individual images may comprise four individual images.

Further, it is to be understood that in some embodiments each one of the individual captured images may be associated with a particular colour component output of the image acquirer 304. For example, in embodiments deploying the Bayer CFA each one of the captured images may be associated with one of the colour filter array images $G_r$, $G_b$, R and B.

The exposure time of each colour component associated image may be controlled individually by the AWB processor 405. In other words, the exposure time used by the image acquirer 304 to capture a particular image associated with a particular colour component may be determined on an individual basis by the AWB processor 405. Consequently in some embodiments the exposure time for each colour component associated image (or image colour component) may be different.

It is to be understood therefore that when the image acquirer 304 is instructed to capture an image by the AWB processor 405, the image acquirer 304 may be arranged to capture a series of individual images of differing exposure times with each image corresponding to a particular image colour component.

The control of the exposure times for the series of individual images captured by the image acquirer 304 may be effectuated or controlled by a signal from the AWB processor 405. This signal may be depicted as the signal connection 412 in Figure 4, where the image acquirer 304 is in some embodiments arranged to receive an input from the AWB processor 405.

It is to be understood in embodiments of the invention that the process of capturing an image as performed by the image acquirer 304 may initially comprise the taking of an initial image at a first exposure time, which may be associated with a first image colour component. The initial image may then be processed by the AWB processor 405 in order to determine a subsequent exposure time for each of the other constituent colour components.

The image acquirer 304 may then be instructed by the AWB processor 405 to capture a series of further images, in which each further image has a specified exposure time and corresponds to one of the other constituent colour components of the image.

The operation of the AWB processor 405 will hereafter be described in more detail by reference to the processing steps depicted in Figure 5.

The AWB processor 405 in some embodiments is configured to receive a first captured image from the image acquirer 304, whereby the image is captured with an exposure time of $t_{exp1}$.

The step of receiving a first captured image from the image acquirer 304 is shown as processing step 501 in Figure 5.

Initially the AWB processor 405 may determine an AWB gain factor corresponding to each colour component output of the image acquirer 304. These factors may then be used to determine a value of the exposure time for each subsequent colour component to be captured by the image acquirer 304.

In some embodiments the factors used to control the exposure time of each subsequent colour component image may be based on AWB gain factors.

For example, the AWB processor 405 may in some embodiments calculate an AWB gain factor for each colour component of a captured image. The AWB gain factor may then be directly applied to the corresponding colour component within the captured image in order to correct for colour in balance. Typically, the AWB gain factor associated with a particular colour component may be determined by gathering statistical data relating to the number of pixels of the same colour component having the same image characteristics.

In some embodiments the AWB gain factor for each colour component within the captured image may be determined by considering the average colour of the image to be gray. In these embodiments the AWB processor 405 first calculates an average value of the pixels for a particular colour component within a captured image. An AWB gain factor may then be determined for each colour component by considering the weighted average value for each colour component to be the same for all colour components within the image.

For example, in embodiments deploying the Bayer colour filter array as part of the image capture process the average of the four colour components $B$, $G_R$, $G_B$ and $R$ may be denoted as $m_R$, $m_{Gr}$, $m_{Gb}$ and $m_B$. In these embodiments the AWB gain factor associated with each colour component $\gamma_R$, $\gamma_{Gr}$, $\gamma_{Gb}$ and $\gamma_B$ may be determined by ensuring the weighted average value for each of the four colour components are equal. In other words, the AWB gain factors $\gamma_R$, $\gamma_{Gr}$, $\gamma_{Gb}$ and $\gamma_B$ are chosen according to

$$\gamma_R \times m_R = \gamma_{Gr} \times m_{Gr} = \gamma_{Gb} \times m_{Gb} = \gamma_B \times m_B,$$

where $\gamma_R$ denotes the AWB gain factor for the red colour component, $\gamma_B$ denotes the AWB gain factor for the blue colour component, $\gamma_{Gr}$ denotes the AWB gain factor for the green pixel in the the R,G,R,G horizontal array line of the Bayer CFA, and $\gamma_{Gb}$ denotes the AWB gain factor for the blue pixel in the B, G, B, G horizontal array line of the Bayer CFA.

In some examples the AWB processor 405 may solve the above expression by selecting the AWB gain factor associated with the largest average value to be unity, and then solving the above expression for the other AWB gain factors such that the above expression hold true.

In some other embodiments the AWB processor 405 generates a AWB gain factor for each colour component within the captured image by considering the dynamic range of the pixels associated with each one of the colour components. In these embodiments the difference between the maximum and minimum pixel value for each colour component may be calculated. The AWB gain factor for each colour component may then be determined as above by considering that the weighted difference value for each colour component is the same for all colour components within the captured image.

For example, in embodiments deploying the Bayer CFA as part of the image capture process the dynamic range for each of the four colour components $B$, $G_R$, $G_B$ and $R$ may be computed as $d_R = \max(R) - \min(R)$, $d_{Gr} = \max(G_r) - \min(G_r)$, $d_{Gb} = \max(G_b) - \min(G_b)$ and $d_{Gr} = \max(B) - \min(B)$, where for instance $d_R$ signifies the dynamic range (or difference) for the red component, $\max(R)$ signifies the maximum red value pixel and $\min(R)$ signifies the minimum red value pixel. In these embodiments the gain factor associated with each colour component $\gamma_R$, $\gamma_{Gr}$, $\gamma_{Gb}$ and $\gamma_B$ may be determined by ensuring the weighted dynamic range for each of the four colour components are equal. In other words, the AWB gain factors $\gamma_R$, $\gamma_{Gr}$, $\gamma_{Gb}$ and $\gamma_B$ are chosen according to

$$\gamma_R \times d_R = \gamma_{Gr} \times d_{Gr} = \gamma_{Gb} \times d_{Gb} = \gamma_B \times d_B .$$

As before, the AWB processor 405 may solve the above expression by selecting the AWB gain factor associated with the largest dynamic to be unity, and then determining the other AWB gain factors such that the above expression holds true.

It is to be understood in some embodiments that the AWB processor 405 determination of the above gain factors relating to each colour component may be performed for the first captured image only, and that the determined AWB gain factors are then used to enable the calculation of exposure times for the subsequent series of images taken by the image acquirer 304.

The process of determining an AWB gain factor corresponding to each colour component based on the first image output from the image acquirer 304 is shown as processing step 503 in Figure 5.

In some embodiments the first captured image may be assigned to one of the colour components. In these embodiments the colour component may be viewed as having been acquired by an image of exposure time $t_{exp1}$.

In some examples the first captured image may be assigned to the colour component whose AWB gain factor is determined to be smallest.

The exposure time of images associated with any of the further colour components may then be determined relative to this first exposure time $t_{\exp1}$. This may be accomplished for each further colour component by weighting the first exposure time with a factor dependent on the AWB gain factor derived for each further colour component. The AWB processor 405 may determine the weighting factor used to determine the colour component specific exposure time by the ratio of the AWB gain factor associated with the colour component to the AWB gain factor associated with the colour component assigned to the first captured image.

In an example deploying the Bayer colour filter array an AWB gain factor associated with one of the Bayer colour components may be determined to be the smallest. In this example, the other remaining colour components may be assigned to the series of subsequent image captured by the image acquirer 304. In an embodiment, the exposure time for each image associated with a Bayer colour component may be determined relative to the first image exposure time $t_{\exp1}$, and may be expressed as;

$$t_{\exp R} = \frac{\gamma_R}{\min(\gamma_R, \gamma_B, \gamma_{Gr}, \gamma_{Gb})} \cdot t_{\exp1},$$ where $t_{\exp R}$ is the exposure time for the Bayer colour component image corresponding to the red pixels,

$$t_{\exp B} = \frac{\gamma_B}{\min(\gamma_R, \gamma_B, \gamma_{Gr}, \gamma_{Gb})} \cdot t_{\exp1},$$ where $t_{\exp B}$ is the exposure time for the Bayer colour component image corresponding to the blue pixels,

$$t_{\exp Gr} = \frac{\gamma_{Gr}}{\min(\gamma_R, \gamma_B, \gamma_{Gr}, \gamma_{Gb})} \cdot t_{\exp1},$$ where $t_{\exp Gr}$ is the exposure time for the Bayer colour component image corresponding to the green pixels in the R, G, R, G horizontal array lines, and

$$t_{\exp Gb} = \frac{\gamma_{Gb}}{\min(\gamma_R, \gamma_B, \gamma_{Gr}, \gamma_{Gb})} \cdot t_{\exp1},$$ where $t_{\exp Gb}$ is the exposure time for the Bayer colour component image corresponding to the green pixels in the B, G, B, G horizontal array lines.

It is to be understood from the above expressions that the exposure time relating to the colour component with a minimum AWB gain factor will reduce to the exposure time of the first captured image $t_{\exp1}$.

It is to be further understood that the particular colour component whose exposure time equation reduces to being the exposure time $t_{\exp1}$ is also the same colour component whose colour component image is assigned to the first captured image.

For example, in an operating scenario of an example deploying the Bayer colour filter array it may be found that the smallest AWB gain factor is associated with the R component. In this scenario the first captured image may be assigned to the $R$ component, and the other Bayer colour components $B$, $G_R$ and $G_B$ may be assigned to a series of subsequent images to be captured by the image acquirer 304. The exposure times of the subsequent images may be expressed as

$$t_{\exp B} = \frac{\gamma_B}{\gamma_R} \cdot t_{\exp1},$$

$$t_{\exp Gr} = \frac{\gamma_{Gr}}{\gamma_R} \cdot t_{\exp1},$$

and

$$t_{\exp Gb} = \frac{\gamma_{Gb}}{\gamma_R} \cdot t_{\exp1}.$$

It is to be understood in some embodiments that each one of the further images may be assigned to a particular colour component, and that the number of further images captured by the image acquirer 304 may be determined by the total number of colour components in the digital image.

For example, in embodiments deploying a Bayer CFA where the first captured image is assigned to the R colour component, the image acquirer would be instructed to capture a further three images with image exposure times of $t_{\exp B}$, $t_{\exp Gr}$ and $t_{\exp Gb}$, corresponding to the $B$, $G_R$ and $G_B$ colour components respectively.

It is to be understood in the above embodiments that the process of auto white balance may be applied to the output colour components of the colour filter array. The images corresponding to the colour components of the colour filter array may then be converted to the standard R, G, B format after the process of auto white balancing has been applied. The AWB processor 405 may comprise a colour filter array interpolator (CFAI) whereby the auto white balanced colour filter array colour components are interpolated to produce an R, G, B full colour image suitable for display on an output device.

In other examples, the AWB processor 405 may apply the colour filter array interpolator before the process of white colour balancing is performed. In these examples the auto white balancing process may be performed on the three R, G, B colour components, rather than the four colour components of the colour filter array output.

In examples deploying colour filter array interpolation before auto white balancing the R, G, B colour components may be analysed using the same methodology as before. In other words, a first image at exposure time $t_{\exp1}$ may be initially acquired and this image may be used to calculate AWB gain factors for each of the three colour components.

In an embodiment, the exposure times for the colour component images may given for the three R, G, B colour components as

$$t_{\exp R} = \frac{\gamma_R}{\min(\gamma_R, \gamma_B, \gamma_G)} \cdot t_{\exp 1},$$

$$t_{\exp B} = \frac{\gamma_B}{\min(\gamma_R, \gamma_B, \gamma_G)} \cdot t_{\exp 1},$$

and $\quad t_{\exp G} = \dfrac{\gamma_G}{\min(\gamma_R, \gamma_B, \gamma_G)} \cdot t_{\exp 1}, \quad$ where $\quad t_{\exp B}$,

$t_{\exp G}$ and $t_{\exp R}$ are the exposure times associated with the captured images for the R, G, B colour components respectively, and $\gamma_R$, $\gamma_B$ and $\gamma_G$ are the respective AWB gain factors.

As before, the first image may be assigned to one of the colour components which may be the colour component with the smallest AWB gain factor.

In other examples, the first image from which the AWB factors are calculated may not be assigned as a colour component image. Rather, in these examples, the image acquirer 304 may acquire a series of further colour component images, whereby each colour component is assigned a further image. Therefore, in these examples, the series of further colour component images may comprise the same number of images as there are output colour components from the colour filter array.

For example, in embodiments deploying a Bayer CFA the image acquirer 304 may be instructed by the AWB processor 405 to capture a further four images corresponding to all the Bayer colour components $R$, $B$, $G_R$ and $G_B$

It is to be understood in these embodiments that the exposure times may be determined as above. In other words the exposure times may be determined from the first captured image.

The process of determining exposure times for the image colour components is shown as processing step 505 in Figure 5.

The AWB processor 405 may then instruct the image acquirer 304 via the signal connection 412 to capture a number of further images, whereby the exposure time of each of the further images may be determined according to the previous processing stage.

In examples deploying a Bayer CFA, the AWB processor 405 may instruct the image acquirer 304 to capture a further three images with each further image having differing exposure times relative to the exposure time of the first captured image.

In embodiments deploying colour filter array interpolation before colour balance processing the AWB processor 405 may instruct the image acquirer 304 to capture a further two images.

In embodiments which utilise the first captured image to just calculate the AWB gain factor and then determine the exposure times for each colour component image, the AWB processor 405 may instruct the image acquirer 304 to capture a number of further images which is equivalent to the number of colour components.

The step of instructing the image acquirer 304 to acquire further images, whereby each acquired further image has an associated exposure time corresponding to a colour component is shown as processing step 507 in Figure 5.

Further, in some examples, an offset value may be added to each of the colour component related background images. The value of the offset value for each colour component may also be related to methods found in AWB processing algorithms.

For example, in some examples, an offset value for each colour component may be determined by considering that colour components above a certain threshold may constitute a white pixel and that these colour components may be equal in value. In these embodiments the offset value may be determined for each colour component by forming a set of equations associated with the colour components of the determined white pixel. These equations may be solved by considering that when an offset value associated with a particular colour component is added to the particular colour component itself the resultant value is the same as all the other offset added colour components.

It is to be understood that the offset value as determined for a particular colour component may then be added to the same colour component for all pixels within the image.

It is to be further understood in the above examples, that the threshold value may be manually selected by a user or automatically selected according to the particular scene captured.

It is to be understood in some embodiments that the series of captured images, in which each image corresponds to a colour component and is captured with an AWB gain determined exposure time, may constitute the overall auto white balanced image. In other words the overall auto white balanced image may be obtained by combining the images relating to each colour component and displaying the resultant image on an output device. As mentioned before, the AWB processor 405 may comprise a CFAI stage whereby the colour components of the CFA may be converted into the RGB format. The conversion may take place either after auto white balance processing or before auto white balance processing.

Therefore, it is to be further understood that the output signal from the AWB processor 405 may be of RGB format.

In some examples, the RGB output signal from the AWB processor 405 may be connected to the input of a RGB to YUV converter 407. In a converter of this type the RGB output from the AWB processor 405 may be converted to a luminance component (Y) and two chrominance components (U, V). The conversion may be performed in order to facilitate any tone mapping process the digital image processor 306 may perform.

Tone mapping may be performed by the tone mapper 409 in Figure 4 whereby one set of colours may be mapped to another.

In some examples, tone mapping may be used to reduce the contrast of an image to a displayable range, whilst preserving the image details and colour appearance. This may be done by mapping the luminance values onto a different set of tonal values.

The output of the tone mapper 409 may then be connected to the input of a YUV to RGB converter 411, in which the luminance and chrominance components of the image may be converted back to an RGB format.

The output from the YUV to RGB converter 411 may be connected to the display or storage device 308, whereby RGB components of the image may then be either displayed or stored by the device 308.

Although the above embodiments of the invention operate within an image processor within an electronic device, it would be appreciated that the invention may be implemented as part of any digital image processor. Thus, for example, embodiments of the invention may be implemented in a digital camera device or an electronic device implementing the functionality of a digital camera.

Thus user equipment may comprise a digital camera such as those described in examples of the invention above. It shall be appreciated that the term user equipment is intended to cover any suitable type of wireless user equipment, such as mobile telephones, portable data processing devices or portable web browsers.

In general, the various examples of the invention may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Examples of this invention may be implemented by computer software executable by a data processor of the mobile device, such as in the processor entity, or by hardware, or by a combination of software and hardware. Further in this regard it should be noted that any blocks of the logic flow as in the Figures may represent program steps, or interconnected logic circuits, blocks and functions, or a combination of program steps and logic circuits, blocks and functions.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs) and processors based on multi-core processor architecture, as non-limiting examples.

Examples of the invention may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre-stored design modules. Once the design for a semiconductor circuit has been completed, the resultant design, in a standardized electronic format (e.g., Opus, GDSII, or the like) may be transmitted to a semiconductor fabrication facility or "fab" for fabrication.

**Claims**

1.  A method comprising:

    receiving (501) a first digital image having a first image exposure time ($t_{exp1}$) captured by an image acquirer (304), wherein the first digital image comprises a plurality of colour components;
    determining a statistical property value (m, d) for each colour component of the first digital image;
    determining (503) an auto white balance gain factor ($\gamma$) for each colour component of the first digital image dependent on the statistical property value for each colour component;
    determining a minimum auto white balance gain factor for the first digital image;
    determining a weighting factor corresponding to each colour component by calculating a ratio of the auto white balance gain factor of the colour component to the minimum auto white balance gain factor of the first digital image; assigning the first digital image to one of the plurality of colour components of the first digital image;
    determining (505) a further exposure time associated with each of the other plurality of colour components, wherein each further exposure time is the product of the weighting factor corresponding to the colour component and the first image exposure time;
    instructing (507) the image acquirer to capture a further digital image for each further exposure time; and
    forming a colour balanced image by combining the first digital image with the further digital images.

2. The method as claimed in claim 1, wherein the statistical property value for the colour component of the first digital image is at least one of:

the mean of all pixel values of the colour component; and
the dynamic range between the maximum valued pixel of the colour component and the minimum valued pixel of the colour component.

3. The method as claimed in any one of claims 1 to 2, wherein the first digital image and the further digital images are assigned to the four colour components from a Bayer colour filter array.

4. The method as claimed in claims 1 to 2, wherein the first digital image and the further digital images are assigned to the red, green and blue colour components of a digital image.

5. An image processing system (302) comprising an image acquirer (304) and a digital image processor (306), said digital image processor having means configured to perform all the steps of the method of any of claims 1 to 4.

6. A computer-readable program comprising instructions to cause the device of claim 5 to execute the steps of the method of any of the claims 1 to 4.

**Patentansprüche**

1. Verfahren, umfassend:

Empfangen (501) eines ersten digitalen Bildes, das eine erste Bildbelichtungszeit ($t_{exp1}$) aufweist und das durch eine Bildaufnahmeeinheit (304) erfasst wurde, wobei das erste digitale Bild eine Vielzahl von Farbkomponenten umfasst,
Ermitteln eines statistischen Eigenschaftswerts (m, d) für jede Farbkomponente des ersten digitalen Bildes;
Ermitteln (503) eines automatischen Weißabgleichverstärkungsfaktors ($\gamma$) für jede Farbkomponente des ersten digitalen Bildes abhängig von dem statistischen Eigenschaftswert für jede Farbkomponente;
Ermitteln eines minimalen automatischen Weißabgleichverstärkungsfaktors für das erste digitale Bild;
Ermitteln eines Gewichtungsfaktors, der jeder Farbkomponente entspricht, indem ein Verhältnis des automatischen Weißabgleichverstärkungsfaktors der Farbkomponente zu dem minimalen automatischen Weißabgleichverstärkungsfaktor des ersten digitalen Bildes berechnet wird;
Zuweisen des ersten digitalen Bildes zu einer aus der Vielzahl von Farbkomponenten des ersten digitalen Bildes;
Ermitteln (505) einer weiteren Belichtungszeit, die jeder der anderen Vielzahl von Farbkomponenten zugeordnet ist, wobei jede weitere Belichtungszeit das Produkt des Gewichtungsfaktors, welcher der Farbkomponente entspricht, und der ersten Bildbelichtungszeit ist;
Anweisen (507) der Bildaufnahmeeinheit, für jede weitere Belichtungszeit ein weiteres digitales Bild zu erfassen; und
Bilden eines farbabgeglichenen Bildes, indem das erste digitale Bild mit den weiteren digitalen Bildern kombiniert wird.

2. Verfahren nach Anspruch 1, wobei der statistische Eigenschaftswert für die Farbkomponente des ersten digitalen Bildes mindestens einer ist aus:

einem Mittelwert aller Pixelwerte der Farbkomponente; und
dem dynamischen Bereich zwischen dem maximal bewerteten Pixel der Farbkomponente und dem minimal bewerteten Pixel der Farbkomponente.

3. Verfahren nach einem der Ansprüche 1 bis 2, wobei das erste digitale Bild und die weiteren digitalen Bilder den vier Farbkomponenten aus einer Bayer-Farbfiltermatrix zugewiesen werden.

4. Verfahren nach einem der Ansprüche 1 bis 2, wobei das erste digitale Bild und die weiteren digitalen Bilder den Rot-, Grün- und Blau-Farbkomponenten eines digitalen Bildes zugewiesen werden.

5. Bildverarbeitungssystem (302), das eine Bildaufnahmeeinheit (304) und einen digitalen Bildprozessor (306) umfasst, wobei der digitale Bildprozessor ein Element umfasst, das konfiguriert ist, um alle Schritte des Verfahrens nach einem der Ansprüche 1 bis 4 auszuführen.

6. Computerlesbares Programm, das Befehle umfasst, um die Vorrichtung nach Anspruch 5 zu veranlassen, die Schritte des Verfahrens nach einem der Ansprüche 1 bis 4 auszuführen.

**Revendications**

1. Procédé comprenant les étapes suivantes :

recevoir (501) une première image numérique ayant un premier temps d'exposition d'image ($t_{exp1}$) capturée par un dispositif de capture d'images (304), où la première image numérique comprend une pluralité de composantes de couleurs ;

déterminer une valeur de propriété statistique (m, d) pour chaque composante de couleur de la première image numérique ;

déterminer (503) un facteur de gain d'équilibrage automatique des blancs (Y) pour chaque composante de couleur de la première image numérique en fonction de la valeur de propriété statistique pour chaque composante de couleur ;

déterminer un facteur de gain d'équilibrage automatique des blancs minimum pour la première image numérique ;

déterminer un facteur de pondération correspondant à chaque composante de couleur en calculant un rapport du facteur de gain d'équilibrage automatique des blancs de la composante de couleur sur le facteur de gain d'équilibrage automatique des blancs minimum pour la première image numérique ;

assigner la première image numérique à une de la pluralité de composantes de couleurs de la première image numérique ;

déterminer (505) un autre temps d'exposition associé à chacune de l'autre pluralité de composantes de couleurs, où chaque autre temps d'exposition est le produit du facteur de pondération correspondant à la composante de couleur et du premier temps d'exposition d'image ;

donner pour instruction (507) au dispositif d'acquisition d'image de capturer une autre image numérique pour chaque autre temps d'exposition ; et

former une image aux couleurs équilibrées en combinant la première image numérique avec les autres images numériques.

2. Procédé tel que revendiqué dans la revendication 1, dans lequel la valeur de propriété statistique pour la composante de couleur de la première image numérique est au moins une valeur parmi :

la moyenne de toutes les valeurs de pixels de la composante de couleur ; et
la plage dynamique entre le pixel de valeur maximale de la composante de couleur et le pixel de valeur minimale de la composante de couleur.

3. Procédé tel que revendiqué dans l'une quelconque des revendications 1 à 2, dans lequel la première image numérique et les autres images numériques sont assignées aux quatre composantes de couleurs à partir d'un réseau de filtres colorés de Bayer.

4. Procédé tel que revendiqué dans les revendications 1 à 2, dans lequel la première image numérique et les autres images numériques sont assignées aux composantes rouge, verte et bleue d'une image numérique.

5. Système de traitement d'image (302) comprenant un dispositif d'acquisition d'image (304) et un processeur d'image numérique (306), ledit processeur d'image numérique ayant des moyens configurés pour exécuter toutes les étapes du procédé de l'une quelconque des revendications 1 à 4.

6. Programme lisible par un ordinateur comprenant des instructions pour amener le dispositif de la revendication 5 à exécuter les étapes du procédé de l'une quelconque des revendications 1 à 4.

FIG. 1

FIG. 2

304          306          308          302

┌──────────────┐   ┌──────────────┐   ┌──────────────┐
│              │   │  DIGITAL     │   │ DISPLAY OR   │
│    IMAGE     │──▶│  IMAGE       │──▶│ STORAGE      │
│  ACQUIRER    │   │  PROCESSOR   │   │ DEVICE       │
└──────────────┘   └──────────────┘   └──────────────┘

# FIG. 3

┌──────────────────────────────────┐
│  RECEIVE FIRST CAPTURED IMAGE     │── 501
│  FROM THE IMAGE ACQUIRER          │
└──────────────────────────────────┘
                 │
                 ▼
┌──────────────────────────────────┐
│  DETERMINE AWB GAIN FACTORS       │── 503
│  FOR EACH COLOUR COMPONENT        │
│  OF THE FIRST IMAGE               │
└──────────────────────────────────┘
                 │
                 ▼
┌──────────────────────────────────┐
│  DETERMINE EXPOSURE TIME          │── 505
│  FOR FURTHER ACQUIRED IMAGES,     │
│  WHEREBY THE FURTHER IMAGES       │
│  ARE ASSOCIATED                   │
└──────────────────────────────────┘
                 │
                 ▼
┌──────────────────────────────────┐
│  INSTRUCT IMAGE ACQUIRER TO       │── 507
│  OBTAIN FURTHER IMAGES WITH       │
│  ASSOCIATED EXPOSURE TIMES        │
└──────────────────────────────────┘
                 │
                 ▼

# FIG. 5

FIG. 4

EP 2 524 509 B1

**EP 2 524 509 B1**

**REFERENCES CITED IN THE DESCRIPTION**

**Patent documents cited in the description**

- US 20050285971 A
- US 6091848 A